Europäisches Patentamt

European Patent Office

Office européen des brevets

(19)

(11) Veröffentlichungsnummer: **0 082 537**
**A1**

(12)
# EUROPÄISCHE PATENTANMELDUNG

(21) Anmeldenummer: **82111892.4**

(22) Anmeldetag: **21.12.82**

(51) Int. Cl.³: **B 21 D 28/22**
**H 02 K 15/02, H 02 K 1/06**

(30) Priorität: **22.12.81 DE 3150770**

(43) Veröffentlichungstag der Anmeldung:
**29.06.83 Patentblatt 83/26**

(84) Benannte Vertragsstaaten:
**CH DE FR GB IT LI SE**

(71) Anmelder: **Kienle & Spiess Stanz- und Druckgiesswerk Gesellschaft mit beschränkter Haftung**
**Bahnhofstrasse**
**D-7123 Sachsenheim(DE)**

(72) Erfinder: **Mitschele, Walter**
**Rosenstrasse 9**
**D-7123 Sachsenheim 1(DE)**

(72) Erfinder: **Henne, Hermann**
**Fuchsweg 9**
**D-7123 Sachsenheim 1(DE)**

(72) Erfinder: **Jauss, Siegfried**
**Nordstrasse**
**D-7123 Sachsenheim 2(DE)**

(74) Vertreter: **Jackisch, Walter, Dipl.-Ing.**
**Menzelstrasse 40**
**D-7000 Stuttgart 1(DE)**

(54) Verfahren zur Herstellung von aus Blechteilen bestehenden Paketen sowie Vorrichtung zur Durchführung eines solchen Verfahrens.

(57) Bei dem Verfahren zur Herstellung von aus Blechteilen bestehenden Paketen werden die Blechteile aneinandergereiht und miteinander zum Paket verbunden. Vor dem Aneinanderreihen werden die Blechteile an ihrem Rand quer zur Blechebene plastisch verformt. Die aneinandergereihten und aneinanderliegenden Blechteile werden dann über diese verformten Abschnitte reibschlüssig aneinander gehalten. Die Blechteile können dadurch ohne gesonderte Klemmmittel selbsttätig zu Blechteilpaketen zusammengesetzt werden. Die Vorrichtung hat ein Blechteilverformungswerkzeug, das in Vorschubrichtung der Blechteile vor einem Stappellager (53, 54, 62, 65) für die Blechteile angeordnet ist. Außerdem ist die Vorrichtung mit einem Ausstoßer (73) für die Blechteilpakete (67,67') versehen. In der Vorrichtung können die Blechteile gestanzt und plastisch verformt sowie zu fertigen Blechteilpaketen gestapelt werden.

Fig. 19

Kienle & Spiess
Stanz- und Druckgießwerk
Gesellschaft mit beschränkter Haftung
Bahnhofstraße
7123 Sachsenheim

Verfahren zur Herstellung von
aus Blechteilen bestehenden Paketen
sowie Vorrichtung zur Durchführung
eines solchen Verfahrens
-------------------------------------------

Die Erfindung betrifft ein Verfahren zur Herstellung von aus
Blechteilen bestehenden Paketen nach dem Oberbegriff des Anspruches 1 sowie eine Vorrichtung zur Durchführung eines solchen Verfahrens nach dem Oberbegriff des Anspruches 7.

Es ist bekannt, einzelne Bleche bei der Herstellung von Statoren und Rotoren zu einem Paket zusammenzufassen, das dann
den Stator bzw. den Rotor bildet. Die Blechteile werden in
einem Stanzautomaten gestanzt und kontinuierlich aneinandergereiht. Eine Bedienungsperson muß von dem Blechteilstapel
die lose aneinanderliegenden Bleche in der gewünschten Stapellänge abnehmen, von Hand auf eine Stange aufreihen und
beispielsweise mit Muttern auf der Stange sichern. Dieses
Blechteilpaket gelangt dann zur Weiterverarbeitung, wo die
einzelnen Bleche beispielsweise durch Nieten oder durch
Klammern,Kleben
Schweißen fest miteinander verbunden werden. Die Stange mit
den Muttern muß anschließend entfernt werden. Dieses Verfahren ist sehr zeit- und arbeitsaufwendig und verteuert die
Herstellung der Blechteilpakete.

Der Erfindung liegt die Aufgabe zugrunde, das gattungsgemäße
Verfahren und die gattungsgemäße Vorrichtung so auszubilden,
daß die Blechteile innerhalb des Paketes ohne gesonderte Verbindungsmittel so fest miteinander verbunden werden können, daß das Blechteilpaket während der Weiterverarbeitung nicht auseinanderfallen kann.

Diese Aufgabe wird erfindungsgemäß mit dem kennzeichnenden Teil des Anspruches 1 bzw. des Anspruches 7 gelöst.

Bei dem erfindungsgemäßen Verfahren werden die Blechteile in einfacher Weise über über ihre plastisch verformten Abschnitte reibschlüssig aneinander gehalten. Nach dem plastischen Verformen werden die Blechteile zum gewünschten Paket aufeinandergelegt, wobei die verformten Abschnitte ausschließlich über Reibschluß fest miteinander verbunden werden. Infolge der erfindungsgemäßen Ausbildung müssen die Blechteile nicht erst von Hand auf eine Stange oder dergleichen aufgereiht und mit gesonderten Klemmitteln auf der Stange gehalten werden. Dadurch lassen sich die Blechteilpakete, wie sie beispielsweise zur Herstellung von Statoren bzw. Rotoren oder Ankerpakete benötigt werden, in kürzester Zeit und mit nur geringem Arbeitsaufwand herstellen. Insbesondere kann mit dem erfindungsgemäßen Verfahren die Herstellung der Blechteilpakete automatisiert werden, so daß keine Handarbeit mehr erforderlich ist. In vorteilhafter Weise ist es beim erfindungsgemäßen Verfahren möglich, während des Stanzens im Stanzwerkzeug die Blechteile zum Paket zusammenzufügen. Mit der erfindungsgemäßen Vorrichtung werden die gestanzten und teilweise plastisch verformten Blechteile zu den einzelnen Paketen gestapelt und die fertigen Blechteilpakete, deren Blechteile reibschlüssig fest miteinander verbunden sind, mit dem Ausstoßer aus der Vorrichtung entfernt. Dadurch können in der Vorrichtung die Blechteile sowohl gestanzt und plastisch verformt als auch zu fertigen Blechteilpaketen gestapelt werden, so daß nach der Entnahme aus der Vorrichtung die Blechteilpakete unmittelbar weiterbearbeitet werden können.

Weitere Merkmale der Erfindung ergeben sich aus den Ansprüchen, der Beschreibung und den Zeichnungen.

Die Erfindung wird anhand einiger in den Zeichnungen dargestellter Ausführungsbeispiele näher erläutert. Es zeigen:

Fig. 1    einen Teil eines Randes eines Blechteiles,
          das mittels eines Stanzwerkzeuges gestanzt
          wird,

Fig. 2    das Blechteil nach dem Stanzvorgang gem.
          Fig. 1,

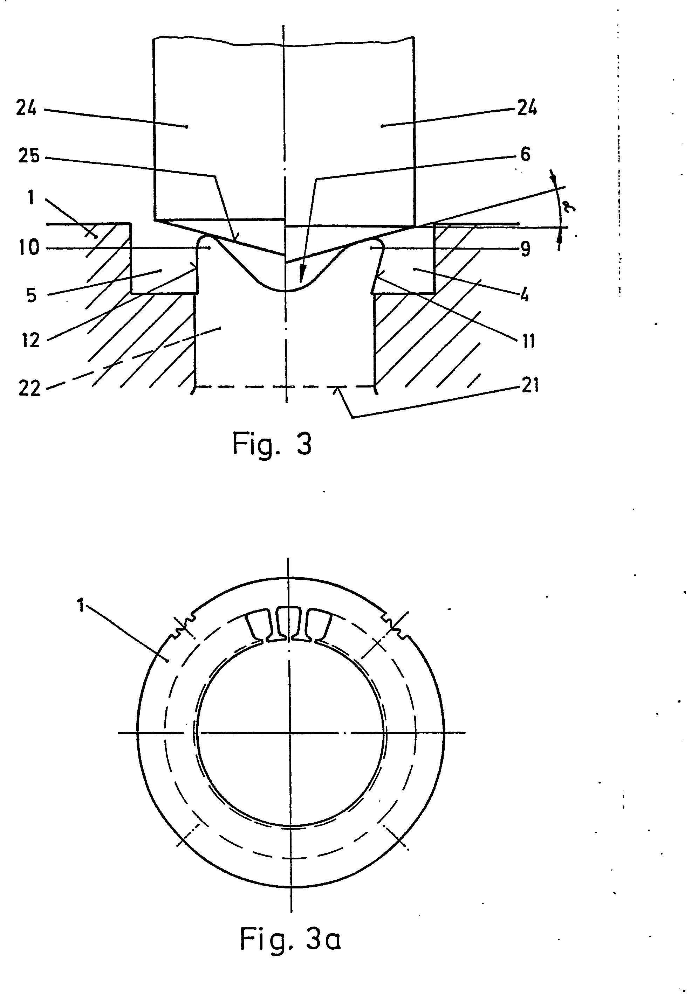

Fig. 3    den Verformungsvorgang eines am Rand des
          Blechteiles vorgesehenen Abschnittes mittels einer Druckrolle,

Fig. 3a   eine Draufsicht auf das gestanzte Blechteil gem. Fig. 3,

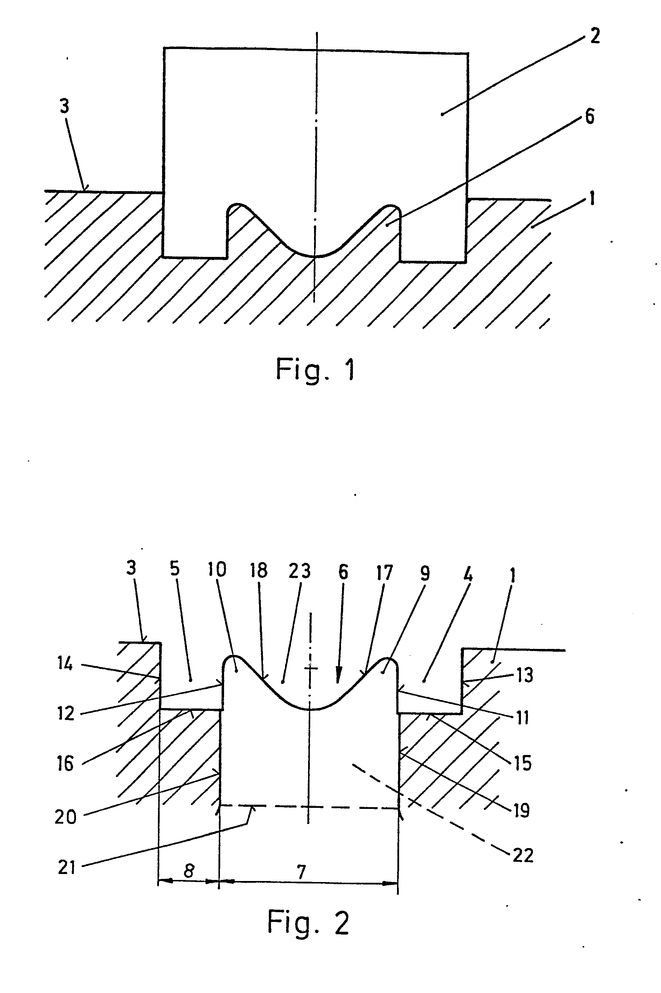

Fig. 4
bis  6    die Verfahrensschritte gem. den Fig.1 bis
          3 bei einer zweiten Ausführungsform eines
          Blechteiles,

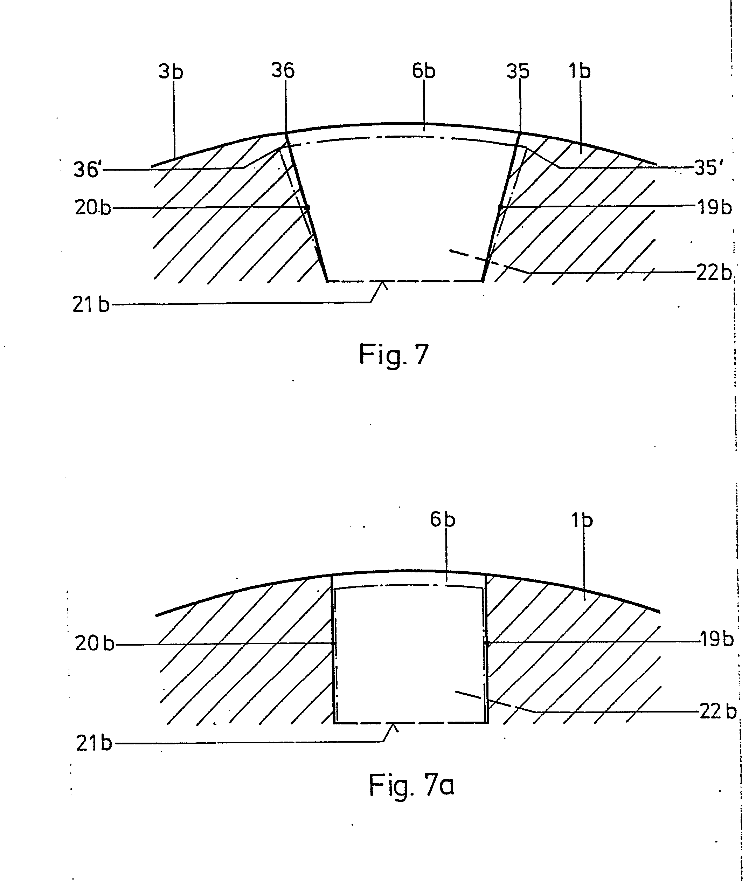

Fig. 7    weitere   Ausführungsformen  eines Blech-
und  7a   teiles mit einer anderen Ausbildung des
          plastisch zu verformenden Abschnittes,

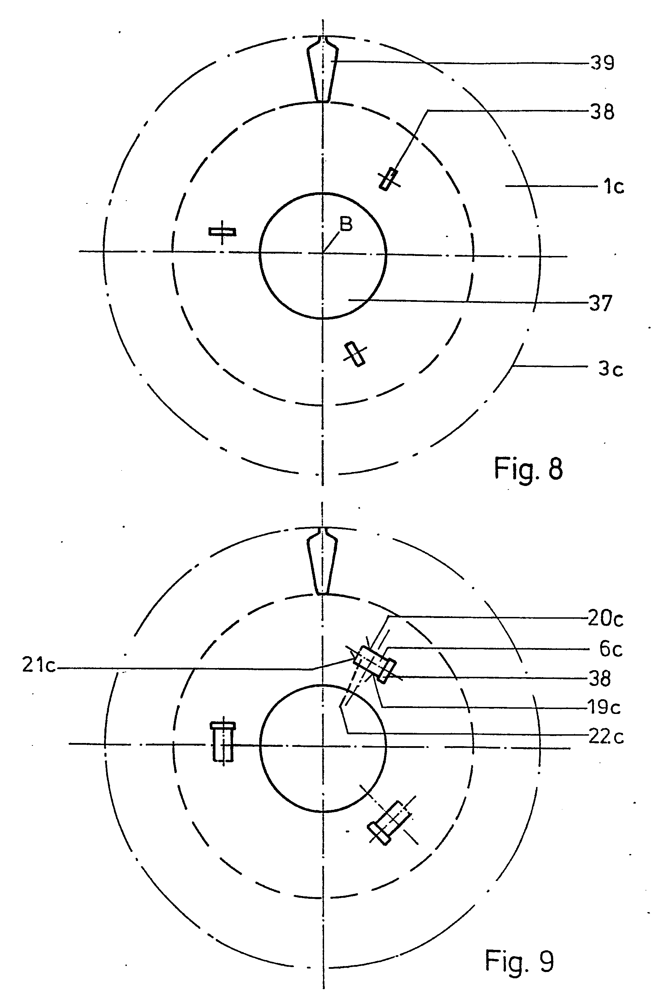

Fig. 8    ein Rotorblechteil mit Freisparungen,

Fig. 9    das Rotorblechteil gem. Fig.8, bei dem im
          Anschluß an die Freisparungen der zu verformende Abschnitt ausgestanzt ist,

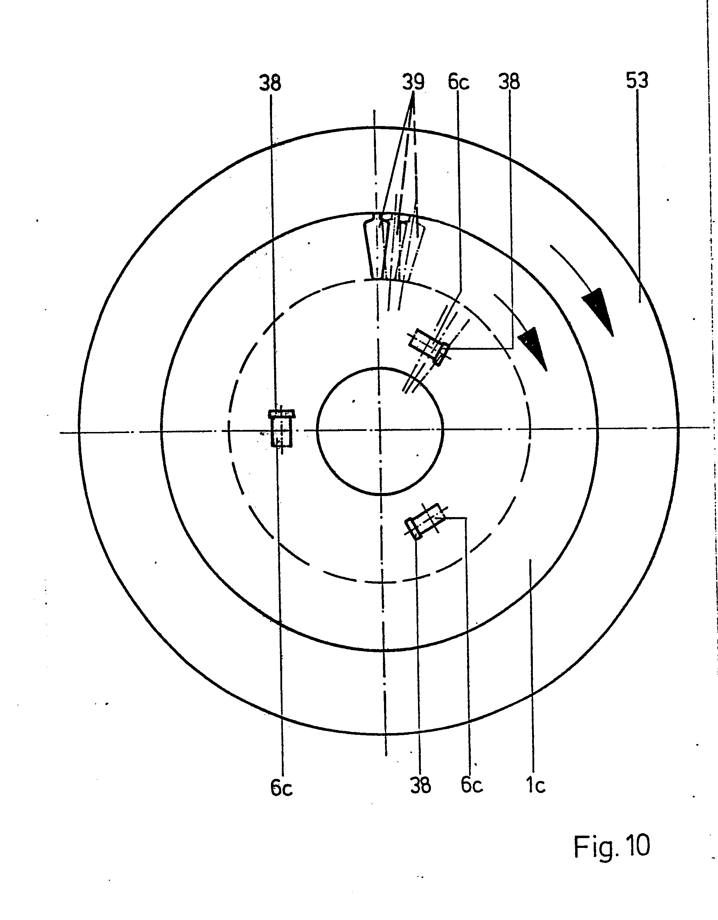

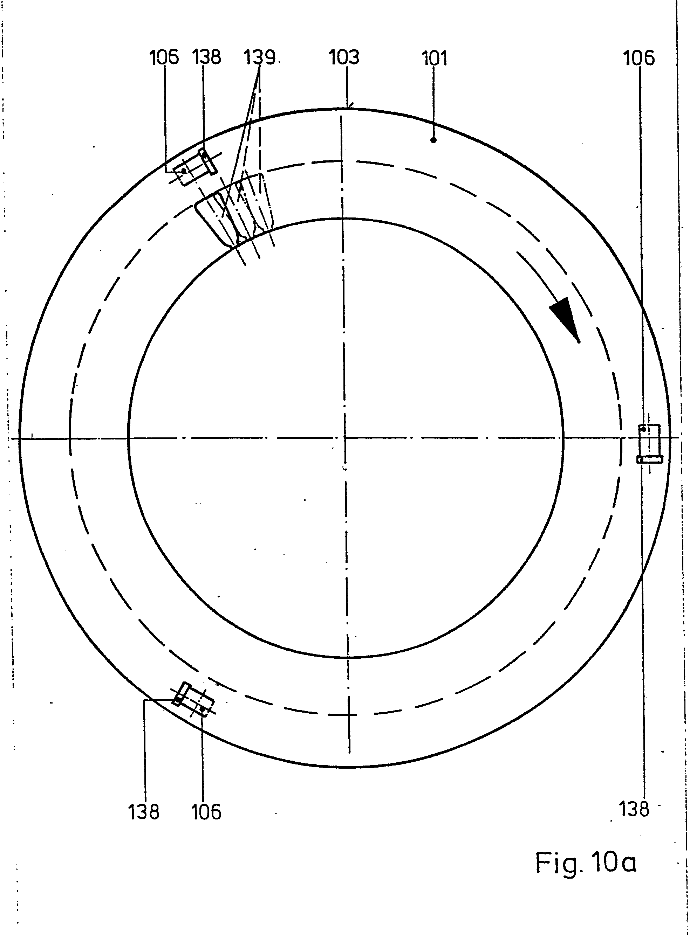

Fig. 10   eine Draufsicht auf mehrere übereinander
          liegende Rotorblechteile nach den Fig.8
          und 9, die innerhalb eines Schnittringes
          jeweils winkelversetzt zueinander angeordnet sind,

Fig.10a   eine Draufsicht auf mehrere übereinander
          liegende Statorblechteile einer weiteren
          Ausführungsform, die jeweils winkelversetzt
          zueinander angeordnet sind,

Fig. 11
bis 13 eine weitere Ausführungsform eines Rotorblechteiles in Darstellungen entsprechend
den Fig. 8 bis 10,

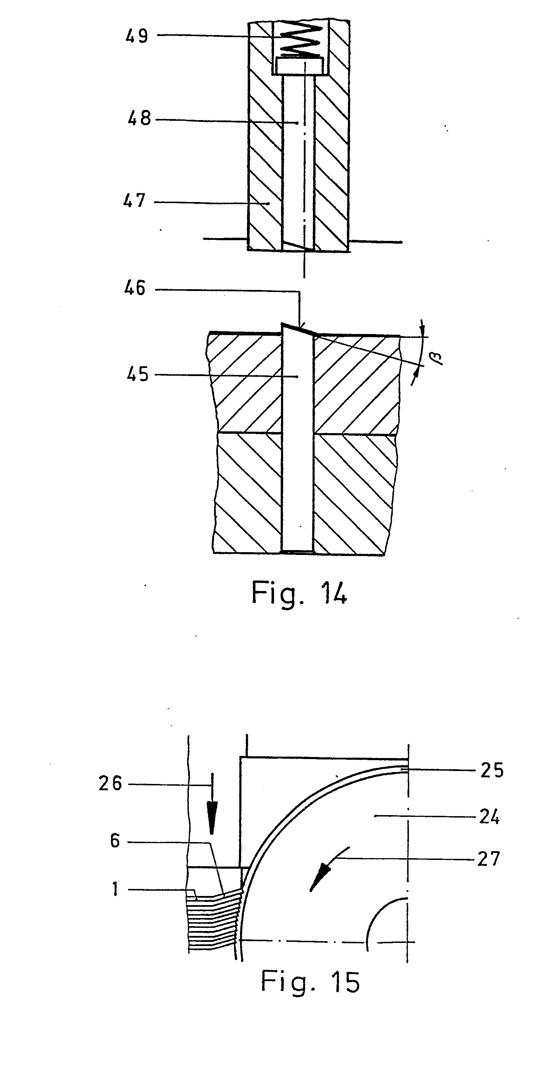

Fig. 14 in schematischer Darstellung ein Biege-
Stanz-Werkzeug einer erfindungsgemäßen
Vorrichtung,

Fig. 15 in vergrößerter Darstellung eine mit
einem Blechteil-paket in Eingriff stehende
Druckrolle,

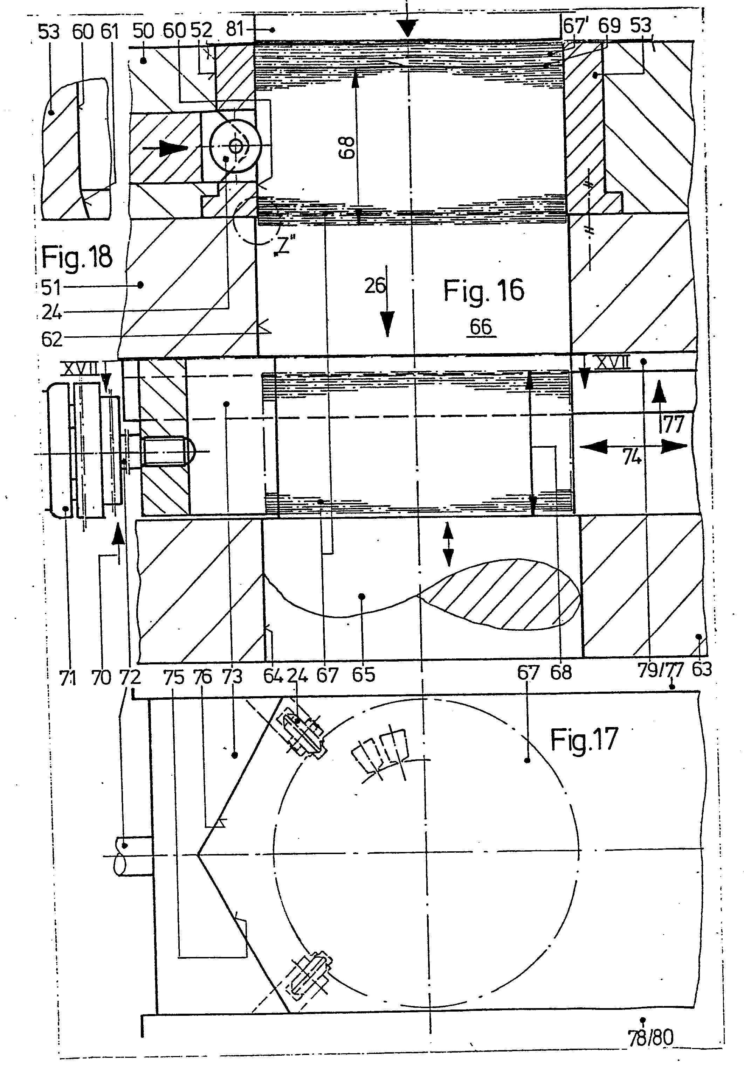

Fig. 16 einen Längsschnitt durch eine erfindungsgemäße Vorrichtung zur Herstellung von Paketen aus
Statorblechteilen,

Fig. 17 eine Ansicht längs der Linie XVII-XVII
in Fig. 16,

Fig. 18 in vergrößerter Darstellung die Einzelheit
Z in Fig. 16.

Fig. 19
und 20 in Darstellungen entsprechend den Fig. 16
und 17 eine erfindungsgemäße Vorrichtung zur
Herstellung von Paketen aus Rotor- und
Ankerblechteilen.

Wie Fig.1 zeigt, wird an einem Blechteil 1, das im Ausführungsbeispiel ein Statorblech ist, aber auch jedes andere geeignete Blechteil sein kann, mitteils eines Stanzwerkzeuges 2
am Rand 3 derart gestanzt, daß das Blechteil Nuten 4,5 sowie
einen Zahn 6 aufweist. Am Rand des Blechteiles 1, das ein Statorblechteil ist, können mehrere Zähne 6 symmetrisch oder asymmetrisch verteilt vorgesehen sein. In den Fig.1 bis 3 ist der Einfachheit
halber der Rand 3 des Blechteiles 1 geradlinig gezeichnet;
bei einem Statorblechteil verläuft aber der Rand längs eines
Kreisbogens (Fig.3a). Die beiden Nuten 4, 5 werden durch den Zahn 6
voneinander getrennt, dessen Breite 7 etwa mehr als doppelt
so breit ist wie die Breite 8 jeder Nut 4,5 (Fig.2). Der Zahn
6 hat zwei Zahnspitzen 9,10, die gegenüber dem Rand 3 gering-

- 9 -

fügig zurückversetzt sind. Die voneinander abgewandten Außenseiten 11, 12 der Zahnspitzen 9, 10 verlaufen geradlinig und parallel zueinander sowie parallel zu den gegenüberliegenden Seitenwänden 13, 14 der Nuten 4, 5. Die Außenseiten 11, 12 und die Seitenwände 13,14 sind durch einen rechtwinklig zu ihnen verlaufenden Boden 15, 16 miteinander verbunden. Die einander zugewandten Innenseiten 17, 18 der beiden Zahnspitzen 9, 10 liegen annähernd rechtwinklig zueinander und gehen bogenförmig gekrümmt ineinander über. Der Übergang von den Innenseiten 17,18 zu den zugehörigen Außenseiten 11, 12 der Zahnspitzen 9, 10 ist ebenfalls abgerundet. Der Krümmungsradius dieser Übergangsstelle ist jedoch wesentlich kleiner als der Krümmungsradius der Übergangsfläche zwischen den Innenseiten 17, 18.

Nach dem Stanzen der Nuten 4, 5 und des Zahnes 6 wird in einem zweiten Verfahrensschritt in Verlängerung der Außenseiten 11, 12 des Zahnes 6 ein weiterer Stanzvorgang durchgeführt, wobei der Zahn 6 längs der Linien 19, 20 vom Blechteil 1 getrennt wird. Außerdem wird der Zahn 6 längs einer Biegekante 21, die im Ausführungsbeispiel senkrecht zu den Stanzlinien 19, 20 liegt, quer zum Blechteil plastisch verbogen. Dadurch steht der Zahn 6 je nach Ausführung nach oben oder unten über die Blechteilebene hervor, wie dies in Fig.15 für die nach oben über die Blechteilebene ragenden Zähne zu erkennen ist.

In der beschriebenen Weise werden alle Blechteile 1 gestanzt und die Zähne 6 gebogen. Nach dem Herausbiegen des Zahnes 6 verbleibt im Bereich zwischen den Stanzlinien 19, 20 im Blechteil 1 eine Ausnehmung 22, die bis zur Biegekante 21 reicht. Außerdem wird im Bereich zwischen den Seitenwänden 13, 14 im Blechteil 1 eine Ausnehmung 23 gebildet, in die die Ausnehmung 22 übergeht und die um die Breite 8 der Nuten 4, 5 breiter ist als die Ausnehmung 22.

Nach dem Herausbiegen des Zahnes 6 aus der Blechteilebene werden die Blechteile derart aufeinandergelegt, daß der herausgebogene Zahn des jeweils untersten Blechteiles in die Ausnehmungen 22, 23 des jeweils obersten Blechteiles eingreift. Der Zahn 6 gelangt hierbei in die schmalere Ausnehmung 22 des jeweils obersten Blechteiles 1, an deren Seitenwänden der Zahn reibschlüssig anliegt. Beim Stanz- und Biegevorgang wird der Zahn 6 in der Regel geringfügig verbreitert, wodurch beim Einsetzen dieses Zahnes in die Ausnehmung 22 schon ein so starker Reibschluß erreicht wird, daß die aneinander-liegenden Blechteile 1 fest aneinander gehalten werden. Im Bereich der breiteren Ausnehmung 23 tritt kein Reibschluß zwischen dem Zahn 6 und dem darüberliegenden Blechteil auf.

Um auf die beschriebene Weise aneinanderliegende Blechteile allein durch Reibschluß zwischen dem jeweiligen Zahn 6 und der Seitenwandung 19, 20 des darüberliegenden Blechteiles 1 zu erreichen, muß der Zahn 6 wenigstens um die Dicke des Blechteiles aus der Blechteilebene herausgebogen sein. Dann wird mit jedem Zahn 6 jeweils das nächste Blechteil 1 durch Reibschluß gehalten. Selbstverständlich kann der Zahn 6 auch um mehr als die Blechteildicke herausgebogen sein, so daß dann der Zahn beispielsweise in die Ausnehmungen 22, 23 der beiden nächsten Blechteile eingreift, so daß durch einen Zahn drei Blechteile reibschlüssig aneinander gehalten werden.

Um den Reibschluß zwischen den aufeinanderliegenden Blechteilen 1 zu erhöhen, werden in einem weiteren Verfahrensschritt mittels einer Druckrolle 24 (Fig.3) die Zahnspitzen 9, 10 geringfügig durch Anwalzen plastisch verformt. Beim Walzvorgang werden die Zahnspitzen 9, 10, in Draufsicht auf das Blechteil 1 gesehen, in die Nuten 4, 5 so gebogen, daß die voneinander abgewandten Außenseiten 11, 12 der Zahnspitzen 9, 10 in Richtung auf die Biegekante 21 konvergieren. Außerdem ist der Abstand zwischen den Außenseiten 11, 12 größer als die Breite 7 der Ausnehmung 22 im Blechteil 1. Wenn daher der Zahn 6 in die Ausnehmung 22 des benachbarten Blechteiles 1 eingreift, wird ein sehr starker Reibschluß zwischen dem Zahn 6 und den Seitenwänden der Ausnehmung 22 erzielt. Ein auf diese Weise aus den Blechteilen 1 zusammengesetztes Blechpaket wird dadurch sehr stark zusammengehalten, ohne daß zusätzliche Verbindungs- und Klemmittel erforderlich sind.

In Fig.3 ist die Druckrolle 24 in der linken Hälfte in ihrer Ausgangslage und in der rechten Hälfte in ihrer Walzlage dargestellt. Um beide Zahnspitzen 9, 10 gleichzeitig anwalzen zu können, ist die Mantelfläche 25 der Druckrolle 24 doppelkegelförmig ausgebildet. Die Mantelabschnitte schließen mit der Horizontalen einen Winkel $\alpha$ von etwa 20° ein.

Der beschriebene Anwalzvorgang wird durchgeführt, wenn die einzelnen Blechteile bereits über die Zähne 6 reibschlüssig miteinander verbunden sind. Die aneinanderliegenden Blechteile 1 werden gem. Fig. 15 an der Druckrolle 24 in Richtung des Pfeiles 26 als Paket vorbeigeführt, wobei die Druckrolle 24 in Richtung des Pfeiles 27 dreht und ihre Mantelfläche 25 die beiden Zahnspitzen 9, 10 jedes Zahnes 6 beim Durchlauf des Blechteilpaketes in der anhand Fig.3 beschriebenen Weise anwalzt. Die Drehrichtung 27 der Druckrolle 24 und die Zuführrichtung 26 des Blechteilpaketes sind gleichgerichtet. Das Blechteilpaket erhält beim Anwalzvorgang von der Druckrolle eine zusätzliche Kraft in Radialrichtung, um die Zahnspitzen 9,10 zu verformen.

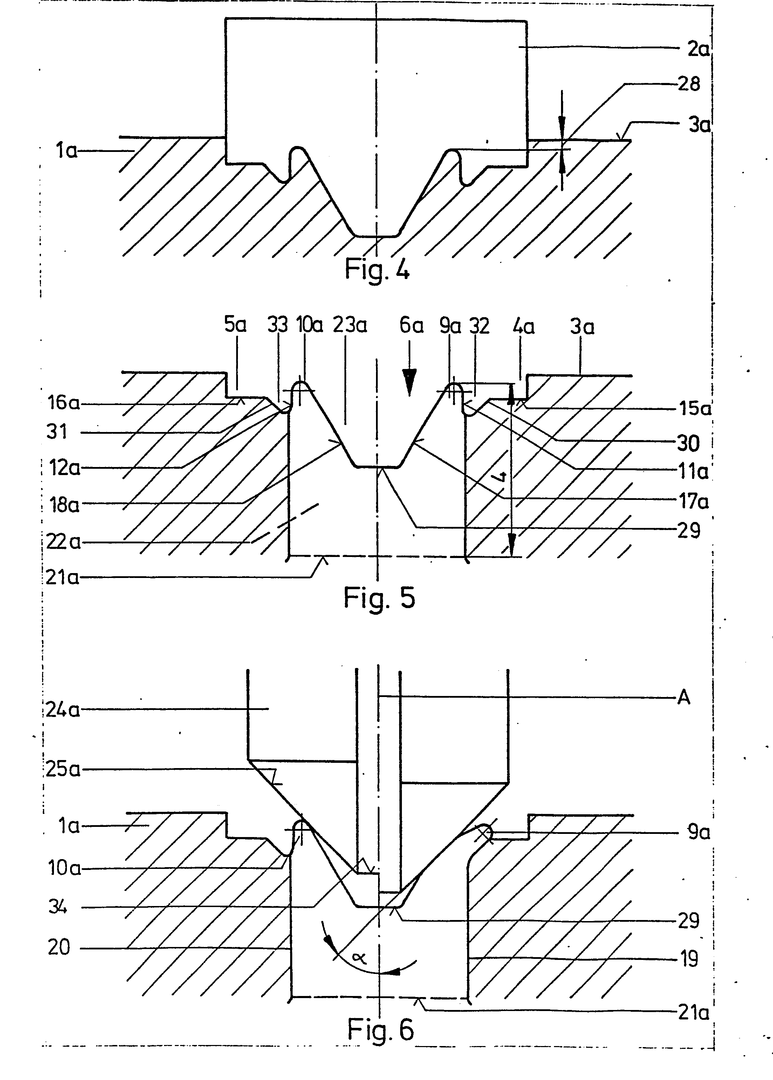

In den Fig. 4 bis 6 sind die einzelnen Verfahrensschritte bei einer anderen Ausbildung des Zahnes des Blechteiles 1a dargestellt. Mit einem Stanzwerkzeug 2a werden am Rand 3a des Blechteiles 1a, das wiederum ein Statorblechteil ist, die Nuten 4a, 5a und der zwischen diesen liegende Zahn 6a gestanzt. Der Zahn hat zwei Zahnspitzen 9a, 10a, die gegenüber dem Rand 3a des Blechteiles 1a um das Maß 28 zurückstehen (Fig.4). Die Innenseiten 17a, 18a der Zahnspitzen konvergieren in Richtung auf die Biegekante 21a und gehen in einen geraden Zwischenrand 29 über, der gekrümmt in die Innenseiten 17a, 18a übergeht. Im Gegensatz zur vorigen Ausführungsform liegen die Innenseiten 17a, 18a spitzwinklig zueinander, vorzugsweise unter einem Winkel von etwa 60°.

Die Außenseiten 11a, 12a der Zahnspitzen 9a, 10a sind über den Boden 15a, 16a der Nuten 4a, 5a verlängert und gehen bogenförmig in eine spitzwinklig zu ihnen liegende Seitenwand 30, 31 über, die stumpfwinklig an den Boden 15a, 16a
der Nuten anschließt. Die Seitenwände 30, 31 und der gegenüberliegende Abschnitt der Außenseiten 11a, 12a der Zahnspitzen 9a, 10a begrenzen eine in Richtung auf die Nuten 4a,
5a offene Vertiefung 32, 33. Infolge dieser Vertiefungen
können die Schneidspitzen mit der Druckrolle 24a noch stärker entgegengesetzt zueinander nach außen gebogen werden als
bei dem zuvor beschriebenen Ausführungsbeispiel. Die doppelkegelförmige Mantelfläche 25a liegt unter einem Winkel $\alpha$
von vorzugsweise etwa 45° zur Radialebene A der Druckrolle
(Fig. 6). In halber Breite ist die Mantelfläche 25a der
Druckrolle 24a mit einem zylindrischen Abschnitt 34 versehen,
der beim Anwalzen der Zahnspitzen 9a, 10a bis nahe an den
Zwischenrand 29 zwischen den beiden Zahnspitzen ragt (Fig.6).

Nach dem Stanzen der Nuten 4a, 5a und des Zahnes 6a wird der
Zahn längs der Stanzlinien 19, 20 vom Blechteil 1a getrennt
und quer zur Blechteilebene längs der Biegekante 21a gebogen.
Die Blechteile 1a werden dann so aufeinandergelegt, daß die
Zähne in die jeweils benachbarten Ausnehmungen 22a, 23a des
jeweils benachbarten Blechteiles eingreifen (Fig.15). In dieser gestapelten Lage werden die Blechteile an der Druckrolle
24a vorbeibewegt, wobei die Zahnspitzen 9a, 10a in der aus
Fig. 6 ersichtlichen Weise nach außen gebogen werden. Infolge
der Vertiefungen 32, 33 können die Zahnspitzen 9a, 10a
wesentlich stärker nach außen gebogen werden als bei der
Ausführung gem. den Fig.1 bis 3, nämlich um etwa 45°. Dadurch wird eine sehr hohe Verspannung zwischen den benachbarten Blechteilen 1a erreicht. Nach dem Anwalzen der Zahnspitzen ist ein sehr starker Zusammenhalt der Blechteile innerhalb des Blechteilpaketes gewährleistet, so daß das Paket ohne zusätzliche Verbindungsmittel zusammengehalten wird,

Bei dem Ausführungsbeispiel gem. Fig.7 wird am Rand 3b des
Blechteiles 1b ein Abschnitt 6b längs der Linien 19b, 20b
vom Blechteil getrennt. Anschließend wird der Abschnitt 6b um die Biegekante 21b aus der Blechteilebene herausgebogen.
Die Stanzlinien 19b, 20b konvergieren vom Rand 3b aus, so
daß der Abschnitt 6b etwa trapezförmigen Umriß hat. Nach
dem Herausbiegen nimmt der Abschnitt 6b die in Fig.7 durch
strichpunktierte Linien angedeutete Lage ein. Da die Breite
des Abschnittes 6b vom Rand 3b aus in Richtung auf die Biegekante 21b abnimmt, gelangen die Ecken 35, 36 des Abschnittes
6b/in die Lage 35', 36', in der Projektion auf das Blechteil
nach dem Hochbiegen
1b gesehen. In dieser Lage hat der Abschnitt 6b, in der
Projektion auf die Blechteilebene gesehen, größere Breite
als die durch das Hochbiegen des Abschnittes entstandene
Ausnehmung 22b. Wenn daher der hochgebogene Randabschnitt 6b
in die Ausnehmung 22b des benachbarten Blechteiles eingreift,
tritt eine sehr hohe Verspannung zwischen den Seitenrändern
des Abschnittes 6b und den Seitenwandungen der Ausnehmung 22b
ein, wodurch auf sehr einfache Weise eine hohe Verspannung
zwischen den aneinanderliegenden Blechteilen erzielt wird.

Die Stanzlinien 19b, 20b können auch parallel zueinander
verlaufen (Fig. 7a), so daß der Abschnitt 6b etwa rechteckigen Umriß hat. Der einen Zahn bildende Abschnitt 6b
wird nach dem Ausstanzen längs der Biegekante 21b aus der
Ebene des Blechteiles 1b herausgebogen. In der herausgebogenen Lage nimmt der Abschnitt 6b die durch strichpunktierte Linien angegebene Lage ein. Beim Biegevorgang wird
der Abschnitt 6b geringfügig verbreitert, so daß er
größere Breite als die durch das Hochbiegen des Abschnittes entstandene Ausnehmung 22b hat. Wenn bei aneinanderliegenden Blechteilen 1b der hochgebogene Randabschnitt 6b
in die Ausnehmung 22b des benachbarten Blechteiles eingreift, wird dadurch eine hohe Verspannung zwischen den
Seitenrändern des Abschnitten 6b und den Seitenwandungen
der Ausnehmung 22b erreicht.

Bei der Ausführungsform nach den Fig. 8 bis 10 werden die
Zähne nicht am Rand des Blechteiles, sondern innerhalb des
Blechteiles hergestellt. Bei den dargestellten Blechteilen
handelt es sich um Rotorbleche, die kreisförmigen Umriß sowie eine zentrale Öffnung 37 haben. Im Blechteil 1c wird wenigstens eine Freisparung 38 gestanzt, die rechteckigen Umriß hat. Im Ausführungsbeispiel werden drei solcher Freisparungen in gleichen Winkelabständen und mit gleichem Abstand von der Achse B des Blechteiles gestanzt. Die Längsseiten der Freisparungen liegen jeweils parallel zu Axialebenen des Blechteiles 1c. Am Rand ist das Blechteil mit einer Nut 39 versehen. Selbstverständlich können weniger oder mehr als drei Zähne und Freisparungen vorgesehen sein.

Im Anschluß an den Stanzvorgang zur Herstellung der Freisparungen 38 werden die Zähne 6c längs der Stanzlinien 19c, 20c aus dem Blechteil 1c gestanzt und um die Biegekante 21c aus der Blechteilebene herausgebogen. Die Stanzlinien liegen parallel zueinander und werden durch die rechtwinklig zu ihnen liegende Biegekante miteinander verbunden, so daß der Zahn 6c viereckigen Umriß hat. Die Stanzlinien 19c, 20c schließen senkrecht an die eine Längsseite der zugehörigen Freisparung 38 an, so daß die Zähne 6c etwa tangential zu einem Kreis um die Längsachse B des Blechteiles 1c verlaufen. Im Anschluß an das Herausbiegen der Zähne 6c aus der Blechteilebene werden die Blechteile aufeinandergelegt, wobei jeder Zahn 6c unter Reibschluß in die Ausnehmung 22c des benachbarten Blechteiles eingreift. Da drei Zähne 6c vorgesehen sind, werden die aneinanderliegenden Blechteile zuverlässig durch Reibschluß aneinandergehalten.

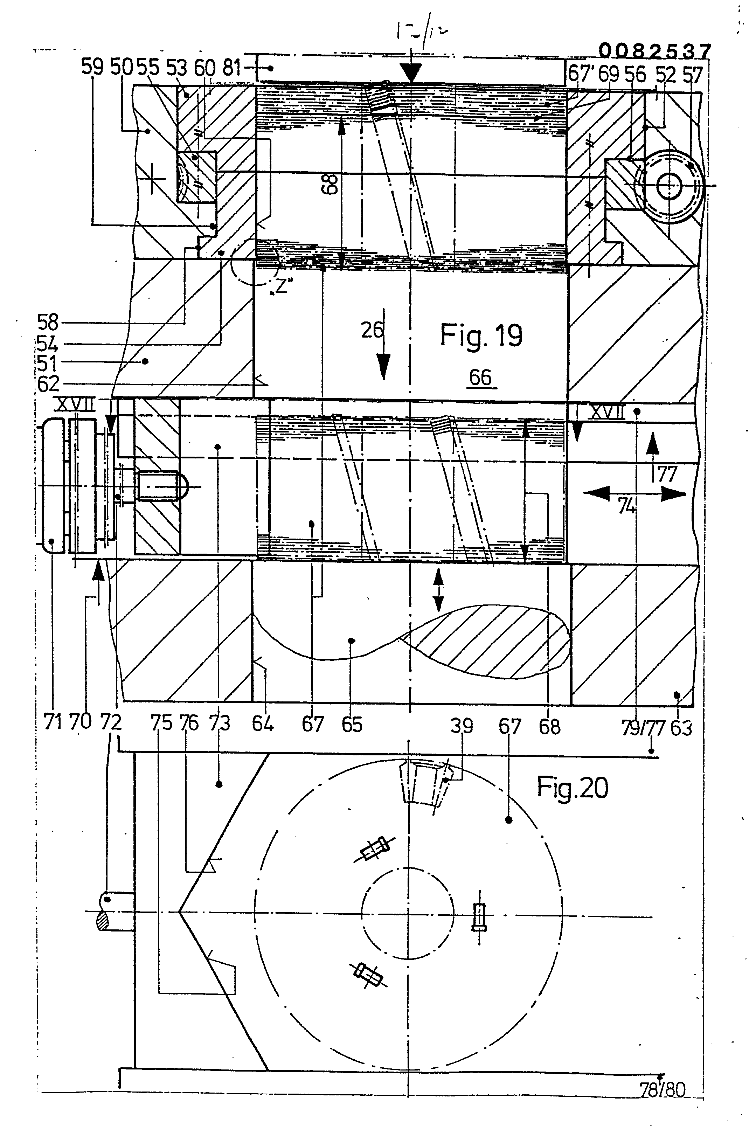

Durch Übereinanderlegen der Rotorbleche 1c wird ein Rotorpaket gebildet. Wenn die Rotornuten 39 am Rand 3c der Rotorbleche 1c einen Drall aufweisen sollen (Fig. 10 und 19), dann müssen aufeinanderfolgende Blechteile geringfügig gegeneinander verdreht sein. In Fig. 10 sind die Rotornuten 39 dreier aufeinanderfolgender Rotorbleche 1c dargestellt. Damit die Zähne 6c auch bei gegeneinander verdrehten Blechteilen in die Ausnehmungen 22c des jeweils benachbarten Blechteiles eingreifen können, sind die Freisparungen 38 vorgesehen, in die die Zähne der benachbarten Blechteile eingreifen können. Die anhand der Fig. 8 bis 10 beschriebenen Zähne mit den Freisparungen können auch bei Statorblechteilen vorgesehen sein, wie dies in Fig. 10a dargestellt ist. In diesem Fall sind die Zähne 106 und die anschließenden Freisparungen 138 nahe dem Rand 103 des Statorblechteiles 101 vorgesehen.
Die Zähne 106 und die Freisparungen 138 sind gleich ausgebildet wie bei der Ausführungsform nach den Fig. 8 bis 10.
Auch liegen die Längsseiten der Freisparungen 138 jeweils
parallel zu Axialebenen des Blechteiles 101. Im Gegensatz
zu den Rotorblechteilen 1c gem. den Fig. 8 bis 10, bei
denen die Nut 39 am äußeren Rand vorgesehen ist, ist bei
dem Statorblechteil 101 die Nut 139 am inneren Rand vorgesehen. Durch Übereinanderlegen der Statorblechteile 101
wird ein Statorpaket gebildet. Wenn die Statornuten 139 am
inneren Rand einen Drall aufweisen sollen (Fig.10a), dann
werden aufeinanderliegende Blechteile geringfügig gegeneinander gedreht, wie dies in Fig. 10a für drei aufeinanderliegende Blechteile dargestellt ist. Die Zähne 106 greifen dann
in entsprechender Weise wie beim Ausführungsbeispiel gem. den
Fig. 8 bis 10 in die Freisparungen 138 des jeweils benachbarten Blechteiles ein.

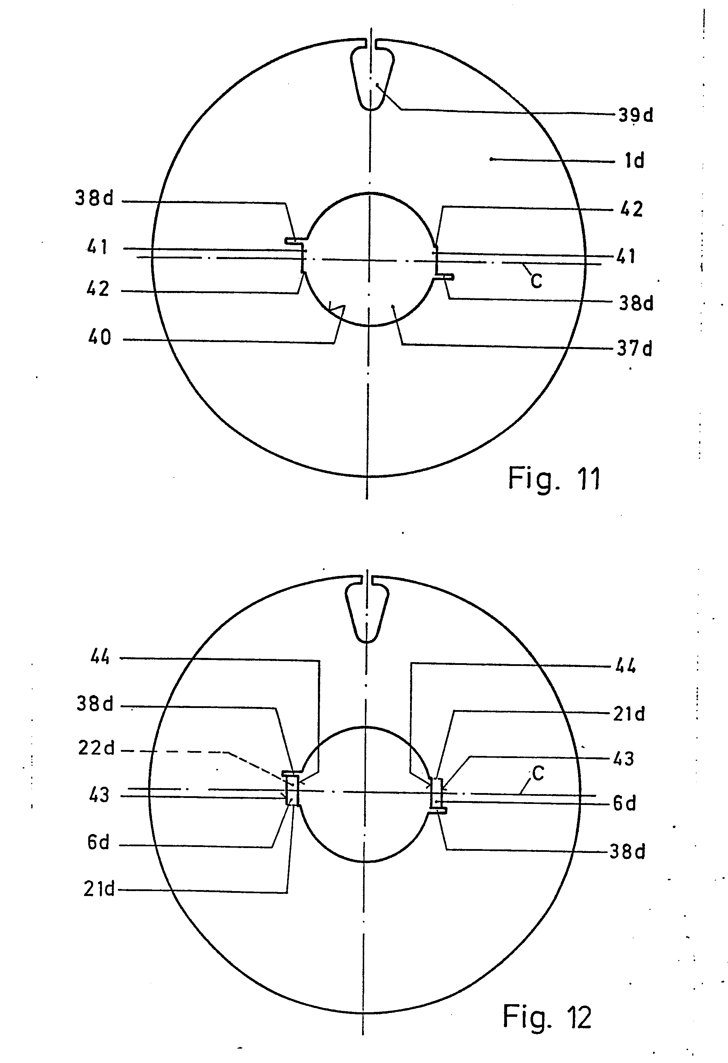

In den Fig.11 bis 13 ist eine weitere Ausführungsform eines
Rotorbleches 1d dargestellt. Wenn zwischen der zentralen Öffnung 37d und der Rotornut 39d kein Raum für die Freisparungen
ist, dann werden die Zähne im Bereich der Öffnungswandung 40
vorgesehen. Im Ausführungsbeispiel hat das Blechteil 1d ˇzwei
                                                mindestens
diametral einander gegenüberliegende Schlitze 38d, die beiderseits einer Axialebene C des Blechteiles liegen und in die Öffnung 37d münden. Die beiden Freisparungen 38d haben rechteckförmigen Umriß, wobei ihre Längsseiten parallel zur Axialebene
C liegen. Im Anschluß an die eine Längsseite der Freisparungen
ist in der Öffnungswandung 40 ein Freiraum 41 ausgestanzt, der
sich jeweils über die Axialebene C hinaus erstreckt und über
einen Absatz 42 in die Öffnungswandung 40 übergeht.

Im Anschluß an den Stanzvorgang zur Herstellung der Freisparungen 38d und der Freiräume 41 werden die Zähne 6d gestanzt, die jeweils durch eine Stanzlinie 43 vom Blechteil 1d
getrennt werden. Der der Stanzlinie 43 gegenüberliegende Seitenrand 44 des Zahnes 6d bildet gleichzeitig auch die Begrenzung des Freiraumes 41. Der Zahn 6d hat rechteckigen Umriß, und die die Längsseiten bildenden Stanzlinien 43 und Seitenränder 44 schließen rechtwinklig an die eine Längsseite der Freisparung 38d an. Die Zähne 6d werden wiederum um die Biegekante 21d, die parallel zur Axialebene C liegt, aus der Blechteilebene herausgebogen.

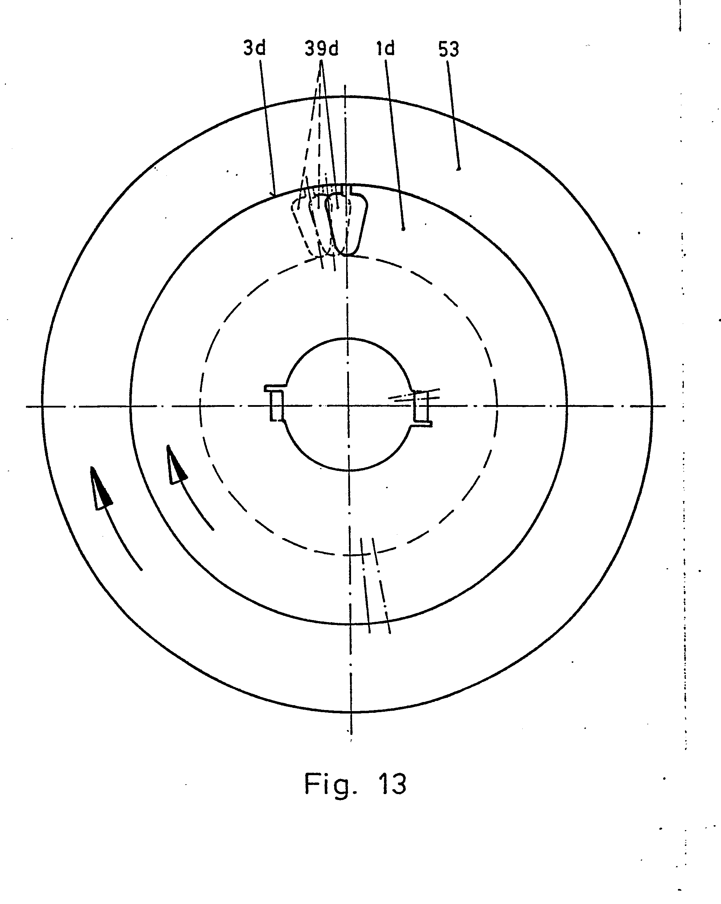

Die Blechteile 1d können unverdreht übereinander-gelegt werden, wobei die Zähne 6d in die durch Herausbiegen der Zähne gebildeten Ausnehmungen 22d des jeweils benachbarten Blechteiles eingreifen, wodurch die benachbarten Blechteile in der beschriebenen Weise reibschlüssig aneinander-gehalten werden. Infolge der Freisparungen 38d können benachbarte Blechteile auch verdreht zueinander angeordnet werden (Fig.13), um Drallnuten 39d am Rand 3d der Blechteile 1d herzustellen. Die Freiräume 41 verhindern, daß selbst bei Toleranzen in Radialrichtung des Blechteiles die Zähne 6d beim Zusammenfügen der Blechteile in den Bereich der Öffnung 37d gelangen, so daß das Blechteilpaket ohne Schwierigkeiten auf eine Rotorwelle aufgeschoben werden kann.

Mit dem beschriebenen Verfahren können auch Ankerpakete aus einzelnen Ankerblechen zusammengesetzt werden, die mit oder ohne Drall ausgeführt sein können.

In Fig. 14 ist schematisch eine Stanz- und Biegeeinheit dargestellt, mit der die Zähne aus den Blechteilen gestanzt und aus der Blechteilebene gebogen werden können. Die Einheit hat einen Stempel 45, der an seinem freien Ende eine dachförmige Anschrägung 46 aufweist. Dem Stempel 45 gegenüber liegt eine Matri-ze 47, in der ein Auswerfer 48 verschiebbar gelagert ist. Der Auswerfer 48 ist beispielsweise mittels einer Feder 49 abgefedert. Mit der Stanz- und Biegeeinheit werden die

- 17 -

vorgestanzten Zähne in einem Arbeitsgang mit ihren Längsseiten vom Blechteil getrennt und um die Biegekante aus der Blechteilebene gebogen. Die Neigung β der Anschrägung 46 bestimmt den Biegewinkel, um den die Zähne aus der Blechteilebene herausgebogen werden. Nach dem Stanz- und Biegevorgang wird das Blechteil durch den Auswerfer 48 aus der Stanz- und Biegeeinheit geworfen.

Die Stanz- und Biegeeinheit kann auch um 180° verdreht angeordnet sein, so daß sich der Stempel 45 oberhalb und die Matrize 47 unterhalb des zu stanzenden Blechteiles befinden. In diesem Fall wird der Zahn nach unten aus der Blechteilebene gebogen.

Die in den Fig. 16 bis 18 dargestellte Vorrichtung zum Zusammenfügen und Abstapeln der Stator-Blechteilpakete hat eine Rahmenplatte 50, die auf einem plattenförmigen Träger 51 sitzt. Die Rahmenplatte 50 weist eine kreisförmige Öffnung 52 für einen angetriebenen Schnittring 53 auf, der an der Wandung der Öffnung 52 anliegt. Der Schnittring 53 erstreckt sich über die gesamte Dicke der Rahmenplatte 50 und sitzt fest auf dem Träger 51.

Der Schnittring 53 hat nahezu über seine gesamte Höhe gleichen Innendurchmesser. Wie Fig.18 zeigt, sind jedoch nahe am Übergang zum Träger 51 mehrere Nasen 61 vorgesehen, die von der Innenwandung 60 des Schnittringes 53 nach innen abstehen. Die Nasen 61 verringern den Innendurchmesser der Öffnung 52 und bilden dadurch eine Bremse für das Blechteilpaket 67.

Der Träger 51 hat ebenfalls eine kreisförmige Öffnung 62, deren Durchmesser geringfügig größer ist als der Innendurchmesser des Schnittringes 53. Die Dicke des Trägers 51 entspricht etwa der Dicke der Rahmenplatte 50. Der Träger 51 ist über (nicht dargestellte) Zwischenstücke auf einem Pressentisch 63 abgestützt, der eine Öffnung 64 für einen Preßkolben 65 aufweist. Der Durchmesser dieser Öffnung 64 ist kleiner als der Durchmesser der Öffnung 62 und 60 des Trägers 51 und des Schnittringes 53.

Der Schnittring 53 und der Träger 51 mit der Öffnung 62
begrenzen einen Transportweg 66 für die Blechteilpakete
67, die auf dem Preßkolben 65 , der ein Paketstapellager
bildet, in Richtung des Pfeiles 26 gefördert werden.

Die gestanzten und mit den hochgebogenen Zähnen versehenen
Blechteile gelangen nacheinander zum Schnittring 53 und
werden mittels eines Stempels 81 in die Öffnung des Schnittringes 53 gedrückt. Die Blechteile werden in der Öffnung
des Schnittringes 53 infolge Reibung an der Öffnungswandung
gehalten. Da die Innenwandung 60 des Schnittringes 53 die
Nasen 61 aufweist, werden die aufeinanderliegenden Belchteile an den dadurch gebildeten Absätzen zunächst abgebremst,
so daß das bis dahin durch Aufeinanderlegen gebildete
Blechteilpaket nicht ungehindert nach unten in Richtung auf
den Preßkolben 65 fallen kann. Wenn die Blechteile mittels
des Stempels in die Öffnung des Schnittringes gedrückt werden,
erfolgt der Fügevorgang, wobei der Zahn jedes Blechteiles in
die zugehörige Ausnehmung des benachbarten Blechteiles eingreift und dadurch über Reibschluß eine Verbindung zwischen
den benachbarten Blechteilen herstellt.

Zu Beginn des Verfahrens befindet sich der Preßkolben 65
in seiner oberen Totpunktlage. Der Druck, unter dem der
Preßkolben 65 steht, ist jedoch nur so groß, daß die auf
ihm liegenden Teile des Blechteilpaketes nicht nach oben
aus der Öffnung 62 des Schnittringes 53 gedrückt werden.
Der Preßkolben 65 wird erst dann in seine obere Totpunktlage verfahren, wenn in der Öffnung 62 bereits die ersten
Blechteile angefallen sind. Beim Hochfahren erfährt dann
der Preßkolben, sobald er mit den Blechteilen in Berührung kommt, einen Widerstand, wodurch eine druckabhängige
Bremseinrichtung betätigt wird. Diese Bremseinrichtung arbeitet hydraulisch oder pneumatisch und erzeugt
einen Bremsdruck, durch den die Kolbenstange des Preßkolbens 65 beaufschlagt wird. Infolge dieses Bremsdruckes wird
auf die Kolbenstange des Preßkolbens 65 eine radiale Kraft
ausgeübt, die zu einer sehr starken Reibkraft beim Verschieben der Kolbenstange führt. Diese Reibkraft hat keine Kraftkomponente in Richtung auf die obere Totpunktlage des Preßkolbens 65, so daß sichergestellt ist, daß durch die Bremseinrichtung der Preßkolben 65 nicht nach oben gedrückt und
dadurch die auf ihm liegenden Blechteile wieder aus der
Öffnung 62 herausgeschoben werden könnten. Vorzugsweise ist
der Zeitpunkt, an dem die Bremseinrichtung betätigt wird, einstellbar, so daß in einfacher Weise die Bremseinrichtung und
der Preßkolben 65 auf die jeweiligen Gegebenheiten eingestellt werden können.

Wenn der Preßkolben 65 an den Blechteilen anliegt und
die Bremseinrichtung betätigt ist, werden nun mittels
des Stempels 81 nacheinander die einzelnen Blechteile
in die Öffnung 62 gedrückt. Hierbei wird durch den Stempel
81 eine Preßkraft ausgeübt, die gegen die durch die Bremseinrichtung auf die Kolbenstange des Preßkolbens 65 ausgeübte Reibungskraft wirkt. Dadurch kann der Preßkolben 65
nur unter hohem Druck nach unten verschoben werden. Dadurch
wird das zwischen dem Stempel 81 und dem Preßkolben 65
liegende Blechteilpaket 67 sehr stark verpreßt, wodurch
die einzelnen Blechteile sauber aufeinander zur Anlage kommen und das gesamte Blechteilpaket kompakt verfestigt wird.
Gleichzeitig gelangen die Zähne in den Bereich der Druckrolle 24 (Fig. 15), die in der Rahmenplatte 50 angeordnet
und in Richtung auf die Zähne verstellbar ist und die Zahnspitzen zur Erhöhung der Haftreibung zwischen den aneinanderliegenden Blechteilen nach außen verformt, wie dies beispielsweise in Fig.3 dargestellt ist.

Um die Blechteilpakete in einfacher Weise in jeweils gewünschter Höhe 68 (Fig.16) herstellen zu können, wird ein sogenanntes Trennblech als Blechteil verwendet, bei dem anstelle der Zähne Aussparungen gestanzt werden. Dies hat zur Folge, daß beim Aufeinanderlegen der Blechteile der abgebogene Zahn des benachbarten Blechteiles in der Aussparung dieses Trennbleches keinen Halt mehr findet.Dadurch findet an dieser Stelle selbsttätig eine saubere und einwandfreie Blechteilpaket-Trennung statt. Die Lage dieses Trennbleches kann maschinell bestimmt werden. Zur Herstellung des Trennbleches ist der Stanzautomat mit einem gesonderten Trennstempel versehen, der in gesteuerter Weise immer dann betätigt wird, wenn die vorgegebene und vorzugsweise elektronisch vermessene Pakethöhe erreicht ist, so daß automatisch im Arbeitsablauf an der gewünschten Stelle das Trennblech vorhanden ist.

In Fig. 16 ist die Lage eines solchen Trennbleches 69 angegeben , durch das die Pakethöhe 68 bestimmt ist. Auf diesem Trennblech 69 wird durch Aufeinanderlegen einzelner Blechteile ein weiteres Blechteilpaket 67' gestapelt. Mit zunehmender Höhe des Blechteilpaketes 67' wird das fertige Blechteilpaket 67 weiter nach unten gedrückt, bis das gesamte Blechteilpaket in den Bereich des Trägers 51 gelangt.

Während des Absenkens des fertigen Blechteilpaketes 67 und des auf dem Trennblech 69 befindlichen, noch herzustellenden Blechteilpaketes 67' liegt der Preßkolben 65 immer an der Unterseite der beiden Blechteilpakete an und stützt diese ab. Erst wenn der Abstand zwischen dem Trennblech 69 und den Nasen 61 mindestens gleich der Pakethöhe 68 ist, wird die Bremseinrichtung, mit der die Kolbenstange des Preßkolbens 65 radial beaufschlagt ist, gelöst, so daß nunmehr der Preßkolben 65 zügig zusammen mit dem auf ihm liegenden fertigen Blechteilpaket 67 bis in seine untere Totpunktlage abgesenkt wird. Das noch nicht fertige Blechteilpaket 67' wird an den Nasen 61 in der Öffnung 60 gehalten, so daß es nicht nach unten fallen kann. Wenn der Preßkolben 65 die untere Totpunktlage erreicht hat, wird ein Ausstoßer 73 geschaltet, so daß dieser ausfährt und das auf dem
Preßkolben liegende Blechteilpaket 67 herausschiebt. Anschließend kehrt der Ausstoßer 73 wieder in seine Ausgangslage zurück und gibt ein Signal an den Preßkolben 65, der daraufhin
wieder mit geringem Druck nach oben ausfährt, bis er an dem in
der Öffnung 60 befindlichen Blechteilpaket 67' zur Anlage
kommt. Durch den erhöhten Widerstand, den der Preßkolben 65
an diesem Blechteilpaket findet, wird wieder in der oben
beschriebenen Weise die Bremseinrichtung betätigt, so daß
nunmehr wiederum das Blechteilpaket 67' über den Stempel 81
gepreßt wird.

Im Bereich zwischen dem Träger 51 und dem Pressentisch 63 ist
eine Ausstoßeinrichtung 70 vorgesehen, mit der das auf dem
Preßkolben aufliegende Blechteilpaket aus der Vorrichtung
entfernt werden kann. Die Ausstoßeinrichtung hat einen Hubzylinder 71 mit einer Kolbenstange 72, die den Ausstoßer
73 trägt, der in Richtung des Doppelpfeiles 74 mittels der
Kolbenstange 72 verschoben werden kann. Der Ausstoßer 73 hat
zwei stumpfwinklig aneinanderschließende Stirnflächen 75,76
(Fig.17), die über die gesamte Höhe des Ausstoßers 73 eben
sind und in halber Breite des Ausstoßers aufeinandertreffen.
Infolge der stumpfwinklig zueinander liegenden Stirnflächen
75,76 liegt das Blechteilpaket 67 unter Linienberührung am
Ausstoßer an, so daß es sich leicht aus der Vorrichtung beim
Ausfahren der Kolbenstange 72 herausschieben läßt. Der Ausstoßer 73 liegt an der Unterseite des Trägers 51 an und hat
geringen Abstand vom Pressentisch 63 (Fig.16). Nach dem Ausstoßen des Blechteilpaketes 67 wird der Ausstoßer in seine
in Fig.16 dargestellte Ausgangslage zurückgeschoben, sodaß
das nachfolgende Blechteilpaket 67', wenn es auf dem Preßkolben 65 nach unten geführt worden ist, ausgestoßen werden kann.

Um beim Ausstoßen ein Hängenbleiben des Blechteilpaketes 67
zu vermeiden, sind an der Unterseite des Trägers 51 zwei
parallel zueinander liegende Führungsleisten 77, 78 befestigt,
deren Abstand voneinander größer ist als die Breite des Blechteilpaketes 67 (Fig.17). Die Führungsleisten haben
L-förmigen Querschnitt. Ihr einer Schenkel 79 liegt an der
Unterseite des Trägers 51 an, während ihr anderer Schenkel
80 die eigentliche Führung für das Blechteilpaket bildet.
Die Länge der Führungsleisten 77,78 ist größer als der Durchmesser der Öffnung 62 im Träger 51.

Die Vorrichtung gem. den Fig. 19 und 20 dient zur Herstellung von Paketen aus Rotor- und Ankerblechteilen. Diese
Vorrichtung stimmt im wesentlichen mit der Vorrichtung gem.
den Fig. 16 bis 18 überein, so daß im folgenden nur noch
die unterschiedlichen Teile im einzelnen beschrieben werden
sollen. Der Schnittring 53 ist in der Öffnung 52 der Rahmenplatte 50 drehbar gelagert und erstreckt sich etwa über die
halbe Dicke der Rahmenplatte 50. Er sitzt auf einem drehbaren Bremsring 54, mit dem er drehfest verbunden ist. Am
Außenumfang des Schnittringes 53 und des Bremsringes 54 ist
ein Schneckenrad 55 befestigt, das mit seiner Oberseite an
einem Absatz 56 des Schnittringes 53 anliegt. Das Schneckenrad 55 erstreckt sich bis in den Bereich des Bremsringes 54
und liegt                                an der Außenmantelfläche
des Schnittringes 53 und des Bremsringes 54 an (Fig. 19).

In der Rahmenplatte 50 ist eine Schnecke 57 gelagert, die
mit dem Schneckenrad 55 kämmt. Über das Schneckengetriebe
55,57 werden der Schnittring 53 und der Bremsring 54 in der
Öffnung 52 der Rahmenplatte 50 drehbar angetrieben.

Der Bremsring 54 ist an seinem vom Schnittring 53 abgewandten
Ende mit einem Flansch 58 versehen, mit dem er auf dem
Träger 51 aufliegt und der einen Absatz 59 der Rahmenplatte
50 untergreift, so daß der Schnittring und der Bremsring
gegen axiales Verschieben gesichert sind. Der Absatz 59 der
Rahmenplatte 50 dient außerdem zur axialen Abstützung des
Schneckenrades 55, das zwischen den beiden Ansätzen 56,59
angeordnet ist. Der Außendurchmesser des Flansches 58 des
Bremsringes 54 ist kleiner als der Außendurchmesser des
Absatzes 56 des Schnittringes 53.

Der Schnittring 53 und der Bremsring 54 haben nahezu über ihre gesamte Höhe gleichen Innendurchmesser.

Die Nasen 61 sind bei dieser Ausführungsform an der Innenwandung und am unteren Ende des Bremsringes 54 vorgesehen. Der Schnittring 53, der Bremsring 54 und der Träger 51 mit der Öffnung 62 begrenzen den Transportweg 66 für die Blechteilpakete 67, die auf dem Preßkolben 65, der ein Paketstapellager bildet, in Richtung des Pfeiles 26 gefördert werden.

Die Blechteilpakete werden in der anhand der Vorrichtung gem. den Fig. 16 bis 18 beschriebenen Weise gebildet und aus der Vorrichtung mittels der Ausstoßeinrichtung 70 entfernt.

Der drehbare Antrieb des Schnittringes 53 und des Bremsringes 54 ist dazu vorgesehen, um bei Verwendung von Rotorblechen am herzustellenden Blechteilpaket die Drallnuten 39 zu erzeugen. Sobald mittels des Stempels 81 das eine Blechteil in den Schnittring 53 gedrückt worden ist, werden über den Schneckentrieb 55,57 der Schnittring und der Bremsring gedreht, wobei das an der Innenwandung des Schnitt- bzw. Bremsringes reibschlüssig gehaltene Blechteil in entsprechendem Maße mitgedreht wird. Anschließend wird das nächste Blechteil mittels des Stempels in den Schnittring gedrückt und anschließend erneut der Schneckentrieb eingeschaltet und die Ringe 53,54 mit den Blechteilen um das gewünschte Maß gedreht. Auf diese Weise werden nach jedem Hub des Stempels die Ringe 53,54 gedreht, so daß die aufeinanderfolgenden Blechteile jeweils winkelversetzt zueinander liegen, so daß die in den Fig. 9 und 20 angedeutete Drallnut 39 am Umfang des Blechteilpaketes erzeugt wird. Sollen diese Nuten am Umfang parallel zur Paketachse verlaufen, dann bleibt selbstverständlich der Schneckenantrieb ausgeschaltet, so daß lediglich die Blechteile mittels des Ste-mpels nacheinander in die Ringe 53,54 gedrückt werden müssen.

Kienle & Spiess
Stanz- und Druckgießwerk
Gesellschaft mit beschränkter Haftung
Bahnhofstraße
7123 Sachsenheim

A 1-85 951/hlo

## Ansprüche

1. Verfahren zur Herstellung von aus Blechteilen, vorzugsweise Rotor- und/oder Statorbleche, bestehenden Paketen, bei dem die Blechteile aneinandergereiht und miteinander zum Paket verbunden werden, dadurch gekennzeichnet, daß vor dem Aneinanderreihen wenigstens ein Abschnitt (6) der Blechteile (1) quer zur Blechebene plastisch verformt wird, und daß die Blechteile derart aneinandergereiht werden, daß die jeweils aneinanderliegenden Blechteile über ihre verformten Abschnitte reibschlüssig aneinander gehalten werden.

2. Verfahren nach Anspruch 1, dadurch gekennzeichnet, daß die Abschnitte (6) aus den Blechteilen (1) teilweise gestanzt, insbesondere am Umfang des Blechteiles (1) und aus der Blechebene herausgebogen werden, wodurch im Blechteil eine Ausnehmung (22) gebildet wird, in die beim Aneinanderreihen der Blechteile der verformte Abschnitt wenigstens des benachbarten Blechteiles unter Reibschluß eingreift, daß die herausgebogenen Abschnitte (6) vorzugsweise nach dem Zusammenfügen der Blechteile (1) quer zur Biegerichtung plastisch verformt werden, vorzugsweise derart, daß der herausgebogene Abschnitt (6), quer zur Blechebene gesehen, Abstand vom übrigen Teil des Blechteiles (1) hat.

3. Verfahren nach Anspruch 1 oder 2, dadurch gekennzeichnet, daß zur automatischen Festlegung der Pakethöhe (68) eines der Blechteile (69) anstelle eines verformten Abschnittes (6) mit einer Ausnehmung versehen wird, die mindestens gleichen Querschnitt wie der verformte Abschnitt hat, und daß dieser Blechteil (69) entsprechend der jeweiligen Paktehöhe in die Blechteile (1) eingereiht wird.

4. Vorrichtung zur Durchführung des Verfahrens nach einem der Ansprüche 1 bis 3, mit mindestens einem Stanzwerkzeug für die Blechteile und mit wenigstens einem in Vorschubrichtung der Blechteile nachfolgenden Stapellager zum Aufeinanderlegen der gestanzten Blechteile zu einem Paket, dadurch gekennzeichnet, daß die Vorrichtung mit mindestens einem Blechteil-Verformungswerkzeug (45 bis 49), vorzugsweise einem Stanz-Biege-Werkzeug, versehen ist, das in Vorschubrichtung der Blechteile (1) vor dem Stapellager (53,54,62,65) angeordnet ist, und daß wenigstens ein Ausstoßer (73) für die Blechteilpakete (67,67') vorgesehen ist.

5. Vorrichtung nach Anspruch 4, dadurch gekennzeichnet, daß das Stapellager mindestens eine Vertiefung in einem Werkzeugtisch (50,51,63) ist, deren oberer Wandungsteil (60) vorzugsweise wenigstens teilweise eine Reibfläche für die Blechteile (1) bildet.

6. Vorrichtung nach Anspruch 4 oder 5, dadurch gekennzeichnet, daß der Boden der Vertiefung durch einen Preßkolben (65) gebildet ist.

7. Vorrichtung nach einem der Ansprüche 4 bis 6, dadurch gekennzeichnet, daß im Bereich der Vertiefung (60,62) vorzugsweise in deren oberen Teil, wenigstens eine Druckrolle (24) vorgesehen ist, die in die Vertiefung ragt und deren Achse quer zur Achse der Vertiefung (60,62) liegt,
daß vorzugsweise die Druckrolle (24) quer zur Achse der
Vertiefung (60,62) verstellbar ist und der Mantel (25)
der Druckrolle (24) insbesondere kegelförmig, vorzugsweise doppelkegelförmig, ausgebildet ist.

8. Vorrichtung nach einem der Ansprüche 4 bis 7, dadurch
gekennzeichnet, daß der vorzugsweise im Schnitt quer
zur Achse der Vertiefung (60,62) prismatisch ausgebildete Ausstoßer (73) quer zur Achse der Vertiefung
(60,62) verschiebbar und vorzugsweise Teil einer Kolben-
Zylinder-Anordnung (70) ist, deren Kolben vorzugsweise durch den Ausstoßer gebildet und in Verschieberichtung (74) seitlich geführt ist.

9. Vorrichtung nach einem der Ansprüche 4 bis 8, dadurch
gekennzeichnet, daß der obere Wandungsteil der Vertiefung (60,62) Teil eines drehbar angetriebenen, im
Werkzeugtisch (50,51,63) gelagerten Ringes (53,54) ist,
der vorzugsweise an seiner Außenseite ein Schneckenrad
(55) aufweist, das mit einer Schnecke (57) in Eingriff
ist.

10. Vorrichtung nach einem der Ansprüche 4 bis 9, dadurch
gekennzeichnet, daß der obere Wandungsteil (60) der
Vertiefung in einen Zwischenabschnitt (62) der Vertiefung übergeht, der größere lichte Weite als der
obere Wandungsteil hat und daß vorzugsweise der obere
Wandungsteil (60) am Übergang in den Zwischenteil (62)
kleinere lichte Weite hat als in seinem übrigen Bereich.

11. Vorrichtung nach einem der Ansprüche 1 bis 10, dadurch
gekennzeichnet, daß der obere Rand des Stapellagers (53,54,62,65) eine Matrizenkante für einen Stanzstempel
(81) des Stanzwerkzeugs bildet.

0082537

Fig. 1

Fig. 2

Fig. 3

Fig. 3a

0082537

Fig. 4

Fig. 5

Fig. 6

0082537

Fig. 7

Fig. 7a

0082537

Fig. 8

Fig. 9

Fig. 10

0082537

Fig. 10a

Fig. 11

Fig. 12

3d    39d    1d    53

Fig. 13

Fig. 14

Fig. 15

0082537

11/12

Fig. 18

Fig. 16
66

Fig. 17

53 60 61 50 60 52 81 67' 69 53

51
24
62

68

26

Z"

XVII XVII

77
74

71 70 72 75 76 73 64 24 67 65 67 68 79/77 63

78/80

59 50 55 53 60 81

67' 69 56 52 57

68

58
54
51
62

Fig. 19

26

66

XVII

XVII

77

74

71 70 72    75 76 73   64    67   65         39    67   68        79/77 63

Fig. 20

78/80

Europäisches
Patentamt

EUROPÄISCHER RECHERCHENBERICHT

**0082537**
Nummer der Anmeldung

EP 82 11 1892

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-C- 917 626 (SIEMENS) <br> * Insgesamt * | 1 | B 21 D 28/22 <br> H 02 K 15/02 <br> H 02 K 1/06 |
| X | DE-A-2 838 685 (MITSUI) <br><br> * Figur 1; Seite 12, Zeilen 1-10 * | 4,6,10 ,11 | |
| X | GB-A- 943 822 (GENERAL MOTORS) <br><br> * Figur 22; Ansprüche 1 und 2 * | 1,2,4, 9,10 | |
| X | GB-A- 830 245 (LIMIT ENGINEERING) <br> * Seite 4, Zeilen 10-15; Anspruch 7; Seite 4, Zeilen 55-77; Ansprüche 8,9; Figur 8 * | 3,5,10 | RECHERCHIERTE SACHGEBIETE (Int. Cl. 3) |
| A | DE-A-3 000 512 (GANZ MÜSZER MÜVEK) | | B 21 D <br> H 02 K |
| A | DE-A-2 740 665 (SCHULER GMBH) | | |

Der vorliegende Recherchenbericht wurde für alle Patentansprüche erstellt.

| Recherchenort <br> DEN HAAG | Abschlußdatum der Recherche <br> 30-03-1983 | Prüfer <br> RIS M. |
|---|---|---|